# EUROPEAN PATENT APPLICATION

(11) **EP 4 697 070 A1**
(43) Date of publication of application: **18.02.2026**
(21) Application number: 24194703.5
(22) Date of filing: 15.08.2024
(51) Int. Cl.: G01V 1/22, E21B 47/14, G08B 1/02, H04B 11/00, H04B 13/02

(54) **APPARATUS FOR FIBER PROTECTION**

(71) Applicant: Nokia Solutions and Networks Oy, 02610 Espoo (FI)
(72) Inventor: Straub, Michael, 75433 Maulbronn (DE)
(74) Representative: Zinsinger, Norbert

(57) **Abstract**

The present invention discloses a first apparatus comprising means for: providing vibrations to the soil at a location of an excavation work, wherein the vibrations carry a predefined message related to the excavation work. The present invention discloses a second apparatus, comprising means for: obtaining data of vibrations associated with a fiber cable at a location of an excavation work; wherein the data comprises amplitude and frequency of the vibrations over time; wherein the means are further configured for: deriving, from the obtained data, a predefined message related to the excavation work.

## Description

### Field of the invention

Various example embodiments relate to distributed acoustic sensing (DAS) system.

### Background

Fiber infrastructure and other service pipes like gas, water and electricity use mainly the same trails and are sometimes side by side in the same trench or might cross each other at certain locations. In case of maintenance or constructive work, other parties might not be informed and might even not aware of a potential risk for their infrastructure.

Distributed Acoustic Sensing (DAS) utilizes an optical fiber cable to obtain sensing data associated with vibration signals along the fiber cable. By using the fiber cable as a sensing element, the DAS system may obtain sensing data (e.g., amplitude data, frequency data, and/or the like) corresponding to each point along a length of the fiber cable.

US20240133735A1 disclose a method using a machine learning model to process the sensing data provided by DAS to estimate the location of a vibration source.

However, such solution relies on passive detection of a possible risky constructive work. The location of constructive work can be determined only after the work is started. Furthermore, vibrations caused by an excavation work are always combined with other environment noises. The accuracy of such passive detection is limited.

There is thus a need for an improved apparatus to solve the above mentioned problem.

### Summary of the Invention

The invention is set out in the appended set of claims.

According to a first aspect of the invention, there is provided a first apparatus, comprising means for: providing vibrations to the soil at a location of an excavation work, wherein the vibrations carry a predefined message related to the excavation work.

According to a second aspect of the invention, there is provided a second apparatus, comprising means for: obtaining data of vibrations associated with a fiber cable at a location of an excavation work; wherein the data comprises amplitude and frequency of the vibrations over time; and wherein the means are further configured for: deriving, from the obtained data, a predefined message related to the excavation work.

According to a third aspect of the invention, there is provided a method, comprising: providing vibrations to the soil at a location of an excavation work, wherein the vibrations carry a predefined message related to the excavation work.

According to a fourth aspect of the invention, there is provided a method, comprising: obtaining data of vibrations associated with a fiber cable at a location of an excavation work; wherein the data comprises amplitude and frequency of the vibrations over time; and wherein the method further comprising: deriving, from the obtained data, a predefined message related to the excavation work.

According to a fifth aspect of the invention, there is provided a computer program comprising instructions for causing an apparatus to perform at least the following: providing vibrations to the soil at a location of an excavation work, wherein the vibrations carry a predefined message related to the excavation work.

According to a sixth aspect of the invention, there is provided a computer program comprising instructions for causing an apparatus to perform at least the following: obtaining data of vibrations associated with a fiber cable at a location of an excavation work; wherein the data comprises amplitude and frequency of the vibrations over time; and wherein the computer program further comprises instructions for causing the apparatus to perform: deriving, from the obtained data, a predefined message related to the excavation work.

According to a seventh aspect of the invention, there is provided an apparatus comprising at least one processor and at least one memory including computer program code, the at least one memory and the computer program code configured to with the at least one processor, cause the apparatus at least to perform: providing vibrations to the soil at a location of an excavation work, wherein the vibrations carry a predefined message related to the excavation work.

According to an eighth aspect of the invention, there is provided an apparatus comprising at least one processor and at least one memory including computer program code, the at least one memory and the computer program code configured to with the at least one processor, cause the apparatus at least to perform: obtaining data of vibrations associated with a fiber cable at a location of an excavation work, wherein the data comprises amplitude and frequency of the vibrations over time; and deriving, from the obtained data, a predefined message related to the excavation work.

According to a nineth aspect of the invention, there is provided a non-transitory computer readable medium comprising program instructions for causing an apparatus to perform at least the following: providing vibrations to the soil at a location of an excavation work, wherein the vibrations carry a predefined message related to the excavation work.

According to a tenth aspect of the invention, there is provided a non-transitory computer readable medium comprising program instructions for causing an apparatus to perform at least the following: obtaining data of vibrations associated with a fiber cable at a location of an excavation work, wherein the data comprises amplitude and frequency of the vibrations over time; and deriving, from the obtained data, a predefined message related to the excavation work.

According to an eleventh aspect of the invention, there is provided a computer readable medium comprising program instructions for causing an apparatus to perform at least the following: providing vibrations to the soil at a location of an excavation work, wherein the vibrations carry a predefined message related to the excavation work.

According to a twelfth aspect of the invention, there is provided a computer readable medium comprising program instructions for causing an apparatus to perform at least the following: obtaining data of vibrations associated with a fiber cable at a location of an excavation work, wherein the data comprises amplitude and frequency of the vibrations over time; and deriving, from the obtained data, a predefined message related to the excavation work.

According to the example embodiments, a message related to the excavation work is actively transmitted using ground as transmission medium, and using fiber cable as sensors. Message related to the excavation work is carried by the vibration applied at an excavation work site. DAS is used to provide data of vibrations sensed through a fiber. The message carried in the vibration is recovered based on the data provided by DAS. Various embodiments may be used as an early warning and communication system, detailed info on planed dredging work can be detected directly at the affected network segment. Preventive actions may be taken accordingly to avoid damage of fiber infrastructure and/or the function of the optical network.

### Brief description of the figures

For a more complete understanding of example embodiments of the present invention, reference is now made to the following descriptions taken in connection with the accompanying drawings in which:
Figure 1 shows a schematic view of an application scenario according to one example embodiment;
Figure 2 shows some examples of possible encoding methods;
Figure 3 shows a schematic view of a receiver setup according to one example embodiment;
Figure 4 shows an example diagram (waterfall plot) of data provided by DAS;
Figure 5 shows an example block diagram of an apparatus 200, 300 operating in accordance with various embodiment.

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

Fiber infrastructure is often buried below the ground and after re-filling the trenches and re-sealing the surface, the exact fiber position can be hardly determined. However, this is the case for other supply and infrastructure lines like gas, white water, brown water and electricity, too. In case of repair or maintenance work from other utility suppliers, the probability of damaging the fiber infrastructure is quite high, because they use all the same routes below public roads or sidewalks. Lines of different suppliers might be deployed in the same trench in different depth. Crossings at various locations e.g., to connect residential users at both sides of the roads are quite common. The probability of damaging other lines while doing repair or maintenance is pretty high.

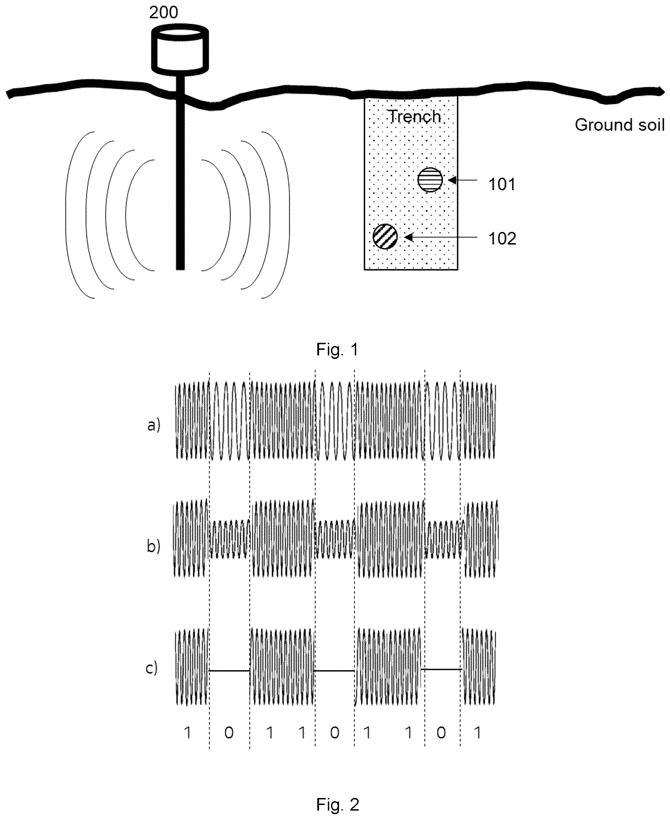

Figure 1 shows a schematic view of an application scenario according to one example embodiment.

In the example shown in Figure 1, fiber cable 101 marked with horizontal stripes and water pipes 102 marked with diagonal stripes are buried in the same trench. For example, for maintenance work of the water pipe 102, an excavation work is planned. The excavation work may have potential risk for the fiber infrastructure.

An apparatus 200 is configured to provide vibrations to the soil at a location of the excavation work.

In the example shown in Figure 1, Geo Radar transmitter is applied to provide artificially generated vibrations. The Geo Radar transmitter comprises a transmitter that may penetrate ground soil in operation.

In other examples, the vibrations may be provided using any of Geo acoustic transmitter, vibrating plate, pulsating panel, excavator shovel, etc.

Specifically, the vibrations carry a predefined message related to the excavation work.

The predefined message may indicate at least one of: location of the excavation work; start of the excavation work; end of the excavation work; digging depth; a kind of excavation work water; a type of construction equipment; and soil properties, etc.

Specifically, a kind of excavation work may comprise an indication of at least one of water, gas, or power, etc. A type of construction equipment may comprise an indication of at least one of excavator, rammer, or earth drill, etc.

A skilled person should know various ways of using vibrations to carry messages. In one example, a vibration at a predefined frequency f₁ having predefined duration t₁ may be used to indicate a start of the excavation work. The vibration may be repeatedly transmitted with a predefined time interval t₂.

In another example, a vibration at a predefined frequency f₁ having predefined duration t₁, and a subsequent vibration at a predefined frequency f₂ having predefined duration t₃ may be used together used to indicate a start of the excavation work.

In yet another example, Morse code may be implemented to carry the predefined message.

In one embodiment, the predefined message may comprise a predefined bit sequence.

Specifically, the bit sequence may be encoded using different frequencies and/or amplitude levels.

Figure 2 shows some examples of possible encoding methods.

In the example a) shown in the upper line of Figure 2, two different frequencies are used to represent different bits "0" and "1". In another example, four different frequencies may be used to represent different bit sequences for example "00", "01", "10" and "11".

In the example b) shown in the middle line of Figure 2, different amplitudes are used to represent different bits "0" and "1".

In the example c) shown in the bottom line of Figure 2, variations in on/off are used to represent different bits "0" and "1".

The vibrations propagate circularly and will be extenuated according to the soil properties. The vibrations may cause variations in the backscattered light in the fiber cable in the surroundings of the source of vibrations.

DAS may be used to sense the vibrations along the fiber cable based on variations in the backscattered light in the fiber cable. For example, the DAS transmits optical pulses into the fiber and measures the phase of the backscattered Rayleigh signal. The processed data provide the details on frequency and amplitude levels of the variations along the fiber cable.

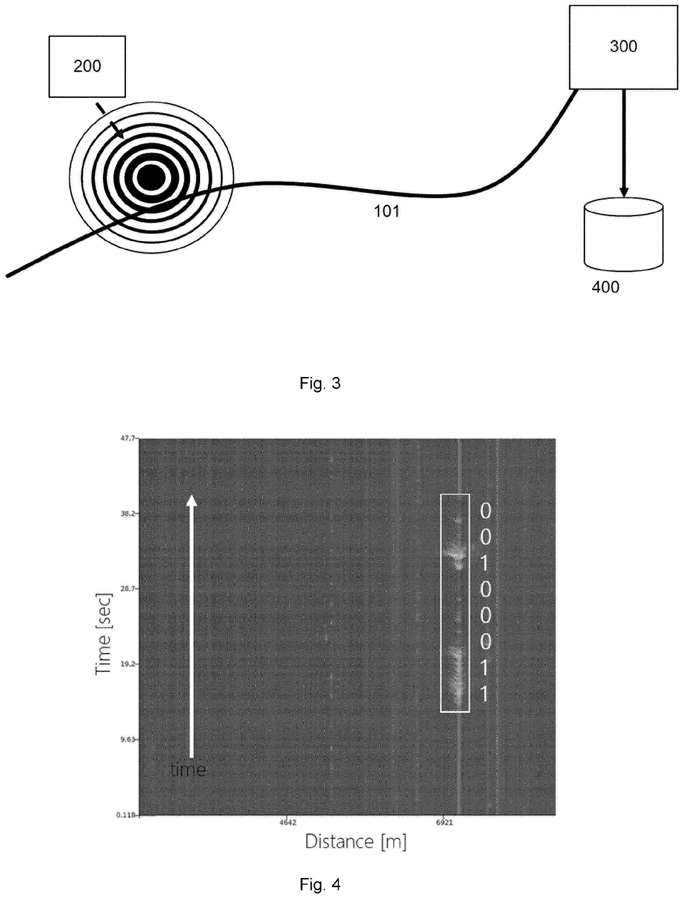

Figure 3 shows a schematic view of a receiver setup according to one example embodiment.

In the example shown in Figure 3, the apparatus 200 provides vibrations to the ground as described above. The fiber cable 101 is buried under the ground near the source of vibrations. The fiber is connected on one end to an apparatus 300. Alternatively, there may be further entities (not shown), for example, DAS, connected between the fiber cable 101 and the apparatus 300. The other end of the fiber cable 101 may be connected to an optical network and is not relevant to various embodiments.

According to the state of the art, the distance between a source of vibration and the DAS system may reach up to 20 km - 40 km. With the development of technique, a longer distance is expected. Thus, the distance between a source of vibration and the DAS system or the apparatus 300 is not limited in various embodiments.

The apparatus 300 is configured to obtain data of vibrations associated with a fiber cable at a location of an excavation work; wherein the data comprises amplitude and frequency of the vibrations over time.

In one example, DAS or other fiber sensing device (not shown) may be used to provide data of vibrations along the fiber cable as a function of time. The apparatus 300 may be configured to receive data of vibrations along the fiber cable from DAS and to further obtain the data of vibrations at the location of the excavation work from the data provided by DAS. Various methods may be applied to determine location of interest based on data provided by DAS.

In another example, further entities (not shown) may be connected between DAS and the apparatus 300, to determine the data of vibrations at the location of the excavation work based on the sensing data provided by DAS, and to provide the determined data of vibrations at the location of the excavation work to the apparatus 300.

In yet another example, the functions of DAS may be integrated into apparatus 300 as well. Namely, the apparatus 300 may be configured to determine the data of vibrations along the fiber cable as a function of time based on variations in the back backscattered light in the fiber cable 101.

Figure 4 shows an example diagram (waterfall plot) of data provided by DAS.

In the example of Figure 4, the horizontal axis represents distance along the fiber 101 in meter, for example the distance from DAS to the source of vibration. The vertical axis represents time in seconds. The intensity of color indicates the strength or amplitude of the vibrations.

In the waterfall plot, one measurement is placed next to the other, similar to weaving a carpet. Each individual measurement (in the x direction) shows the measured intensity over the distance. Using a histogram and corresponding threshold values, a temporal sequence can be derived over time in y-axis.

The distance information may be obtained from the time difference between the transmitted pulses and the backscattered and received signal. The DAS system is a special OTDR measuring device that additionally measures and evaluates the phase of the returned light. By knowing the used fiber path (e.g., from the planning documents). The exact position can be determined from the runtime information and the route map.

Various methods may be implemented to obtain the data marked in the rectangle as data of vibrations at the location of the excavation work.

Firstly, various methods may be applied to detect the position (distance) where an acoustic event occurs. Secondly, the change at this position is recorded.

Specifically, the apparatus 300 is configured to derive from the obtained data, a predefined message related to the excavation work.

In the example of Figure 4, the apparatus may be configured to derive a predefined bit sequence, for example "11000100", from the obtained data.

Specifically, the duration of one bit may be predefined and synchronized between the apparatus 200 and the apparatus 300. In one example, the change of frequency and/or intensity (to be compared with defined threshold levels) is analyzed over time in respect to the predefined bit duration.

The meaning of the respective bit sequence may be predefined and synchronized between the apparatus 200 and the apparatus 300. In another example, an extra start and stop sequence might be predetermined. In yet another example, additional information like number of transmitted bits and a check sum could be provided, too.

In the example of Figure 4, the predefined bit sequence is determined based on change in amplitude levels over time. Alternatively or additionally, the apparatus 300 may be configured to derive the predefined bit sequence based on a change in frequencies over time.

In one embodiment, the vibrations may be provided before and/or during the excavation work.

Additionally or alternatively, the vibrations may be provided after the excavation work as well.

Providing the vibrations carrying the predefined message related to the excavation work before the excavation work makes an early warning possible.

In one embodiment, the apparatus 300 may be configured to send a warning signal based on the predefined message to a centralized control center 400 or an operator of an optical network relying on the fiber cable 101.

The operator of the optical network may initialize preventive or remedy actions based on the warning signal.

Preventive or remedy actions may comprise: for example, organizing field force people to standby for maintenance, and/or bypassing affected lines and reroute traffic via other lines. For example, the operator may change traffic from fiber 101 to another one (not shown). Thereby, even if damage would happen to the fiber 101 during the excavation work, data traffic of related end-users would not be affected.

Additionally or alternatively, the apparatus 300 may be configured to send a warning signal based on the predefined message to the apparatus 200.

The warning signal may be transmitted in various ways. In one example, the warning message may be transmitted via wireless communication network.

Accordingly, after the apparatus 200 receives the warning signal from the apparatus 300, an operator of the apparatus 200 may stop or replan the evacuation work to prevent damage to the fiber infrastructure.

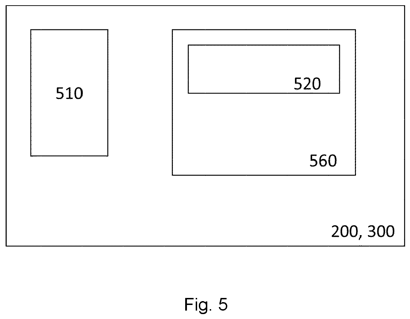

Figure 5 shows an example block diagram of an apparatus 200, 300 operating in accordance with various embodiment.

The apparatus 200, 300 includes a processor 510 and a memory 560. In other examples, the apparatus 200, 300 may comprise multiple processors.

In the example of Figure 5, the processor 510 is a control unit operatively connected to read from and write to the memory 560. The processor 510 may also be configured to receive control signals received via an input interface and/or the processor 510 may be configured to output control signals via an output interface. In an example embodiment the processor 510 may be configured to convert the received control signals into appropriate commands for controlling functionalities of the apparatus 200, 300.

The memory 560 stores computer program instructions 520 which when loaded into the processor 510 control the operation of the apparatus 200, 300 as explained above. In other examples, the apparatus 200, 300 may comprise more than one memory 560 or different kinds of storage devices.

Computer program instructions 520 for enabling implementations of example embodiments of the invention or a part of such computer program instructions may be loaded onto the apparatus 200, 300 by the manufacturer of the apparatus, by a user of the apparatus, or by the apparatus itself based on a download program, or the instructions can be pushed to the apparatus by an external device. The computer program instructions may arrive at the apparatus via an electromagnetic carrier signal or be copied from a physical entity such as a computer program product, a memory device or a record medium such as a Compact Disc (CD), a Compact Disc Read- Only Memory (CD-ROM), a Digital Versatile Disk (DVD) or a Blu-ray disk.

According to an example embodiment, the apparatus 200, 300 comprises means, wherein the means comprises at least one processor 510, at least one memory 560 including computer program code 520, the at least one memory 560 and the computer program code 520 configured to, with the at least one processor 510, cause the performance of the apparatus 200, 300.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer, with one example of a computer described and depicted in Figure 5. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

It will be obvious to a person skilled in the art that, as the technology advances, the inventive concept can be implemented in various ways. The invention and its embodiments are not limited to the examples described above but may vary within the scope of the claims.

## Claims

1. A first apparatus (200), comprising means for:
- providing vibrations to the soil at a location of an excavation work, **characterized in that**,
the vibrations carry a predefined message related to the excavation work.

2. The apparatus (200) according claim 1, wherein the predefined message comprises a predefined bit sequence.

3. The apparatus (200) according claim the preceding claim, wherein, the bit sequence is encoded using different frequencies and/or amplitude levels.

4. The apparatus (200) according to any preceding claim, wherein the vibrations are provided before and/or during the excavation work.

5. The apparatus (200) according to any preceding claim, wherein the vibrations are provided after the excavation work.

6. The apparatus (200) according to any preceding claim, wherein, the vibrations are provided using any one of:
- Geo Radar transmitter,
- Geo acoustic transmitter,
- vibrating plate,
- pulsating panel,
- excavator shovel.

7. The apparatus (200) according to any preceding claim, wherein the predefined message indicates at least one of:
- location of the excavation work;
- start of the excavation work;
- end of the excavation work;
- digging depth;
- a kind of excavation work;
- a type of construction equipment; and
- soil properties.

8. The apparatus (200) according to any preceding claim, wherein the means are further configured for:
- receiving a warning signal from a second apparatus (300).

9. A second apparatus (300), comprising means for:
- obtaining data of vibrations associated with a fiber cable at a location of an excavation work; wherein the data comprises amplitude and frequency of the vibrations over time;
**characterized in that**, the means are further configured for:
- deriving, from the obtained data, a predefined message related to the excavation work.

10. The apparatus (300) according to the preceding claim, wherein the means are further configured for:
- deriving a predefined bit sequence from the obtained data.

11. The apparatus (300) according to the preceding claim, wherein the means are further configured for:
- deriving the predefined bit sequence based on a change in frequencies and/or amplitude levels over time.

12. The apparatus (300) according to any of claim 9-11, wherein the means are further configured for:
- sending a warning signal based on the predefined message to a centralized control center (400) or an operator of an optical network relying on the fiber cable.

13. The apparatus (300) according to any of claim 9-12, wherein the means are further configured for:
- sending a warning signal based on the predefined message to a first apparatus (200).

14. A computer program comprising instructions for causing an apparatus to perform at least the following:
- providing vibrations to the soil at a location of an excavation work, **characterized in that**,
the vibrations carry a predefined message related to the excavation work.

15. A computer program comprising instructions for causing an apparatus to perform at least the following:
- obtaining data of vibrations associated with a fiber cable at a location of an excavation work; wherein the data comprises amplitude and frequency of the vibrations over time;
**characterized in that**, the computer program further comprises instructions for causing the apparatus to perform:
- deriving, from the obtained data, a predefined message related to the excavation work.
